# EUROPÄISCHE PATENTSCHRIFT

(11) **EP 3 513 004 B1**
(45) Veröffentlichungstag und Bekanntmachung des Hinweises auf die Patenterteilung: **27.05.2020**
(21) Anmeldenummer: 17791923.0
(22) Anmeldetag: 18.09.2017
(51) Int. Cl.: E01H 11/00, A01M 21/04

(54) **VORRICHTUNG ZUR ZERSTÖRUNG VON PFLANZEN**
DEVICE FOR DESTROYING PLANTS
DISPOSITIF POUR ÉLIMINER DES VÉGÉTAUX

(30) Priorität: 16.09.2016 DE 102016011289; 28.02.2017 DE 102017001827
(43) Veröffentlichungstag der Anmeldung: 24.07.2019
(73) Patentinhaber: Zasso GmbH, 52076 Aachen (DE)
(72) Erfinder: DE ANDRADE COUTINHO FILHO, Sergio, 13337-414 Indaiatuba (BR); EBERIUS, Matthias, 52146 Würselen (DE); VANDENHIRTZ, Dirk, 52076 Aachen-Kornelimünster (DE)
(74) Vertreter: Castell, Klaus
(86) Internationale Anmeldenummer: PCT/DE2017/000303
(87) Internationale Veröffentlichungsnummer: WO 2018/050143

(56) Entgegenhaltungen:
- WO-A1-99/17606
- WO-A1-2018/050142
- DE-A1- 4 140 553
- FR-A1- 2 473 265
- FR-A1- 2 488 234
- JP-A- H0 556 739
- JP-A- H07 170 899
- US-A- 546 682
- US-A- 565 671
- US-A- 3 919 806
- US-A1- 2015 027 040

## Beschreibung

Die Erfindung betrifft eine Vorrichtung zum Abtöten und Schwächen von Pflanzen und anderen Organismen, die eine Fördereinrichtung für die Bewegung der Vorrichtung, eine Hochspannungsquelle und einen mit der Hochspannungsquelle elektrisch verbundenen Applikator aufweist.

Es ist bekannt, beispielsweise zum Auslichten von Wildkräutern, ein Gehäuse mit einer Elektronik zur Abgabe einer Hochspannung in einem vorbestimmten Abstand über den Boden zu führen. Durch eine Hochspannung zwischen der Elektrode und einem Erdkontakt oder der Erde oder Pflanze wird die betroffene Pflanze durch einen Stromschlag abgetötet oder geschwächt.

Insbesondere an Bahndämmen, im Gleisbett und den direkt angrenzenden Flächen werden chemische Unkrautbekämpfungsmittel eingesetzt, um den Schienenbereich von unerwünschtem Pflanzenbewuchs frei zu halten. In vielen Bereichen ist dies aber unerwünscht und daher schlagen die EP 1 256 275 A2 und die EP 0 026 248 A1 gattungsgemäße Vorrichtungen vor, die es erlauben, das Wachstum von Pflanzen über eine Hochspannungseinrichtung zu behindern.

Derartige Einrichtungen sind aufwändig, elektrotechnisch sehr schwer handhabbar, nur bei niedrigen Fahrtgeschwindigkeiten einsetzbar, berücksichtigen nicht die zunehmende Zahl von Steuerungs- und Signaltechnik im und in der Nähe des Gleisbetts, die zunehmende Art verschiedener Gleisbettausführungen und führen häufig nur zu einer begrenzten Schädigung der Pflanzen aber zu einer erheblichen Beeinträchtigung der Infrastruktur. Daher haben sich diese Einrichtungen bisher gegenüber chemischen Pflanzenvernichtungsmitteln nicht durchgesetzt.

Chemische Pflanzenvernichtungsmethoden haben eine generell hohe Wirkeffizienz und werden bei Geschwindigkeiten bis 50 km/h eingesetzt. Sie dürfen jedoch nicht oder nur noch sehr begrenzt z. B. in Naturschutz- und Wasserschutzgebieten, Bahnhöfen, auf Brücken etc. eingesetzt werden und haben oft generell nur noch eine befristete Ausnahmegenehmigung aufgrund der (Öko)Toxizität der Wirkstoffe. Auch sind einige Pflanzenarten gegen die Herbizide resistent geworden oder konnten noch nie damit bekämpft werden, sodass sich diese Pflanze invasiv ausbreiten können. In einigen Fällen werden deshalb auch manuelle, thermische oder mechanische Verfahren eingesetzt, die jedoch sehr teuer und arbeitsaufwändig oder kaum in einen hohen, logistisch sehr vorteilhaften Geschwindigkeitsablauf zu integrieren sind.

JP H05 56739 A offenbart eine gattungsgemäße Vorrichtung mit einer sensorgeführten Höhenverstelleinrichtung für den Applikator.

Der Erfindung liegt daher die Aufgabe zugrunde, derartige Vorrichtungen insbesondere aber nicht ausschließlich für den Einsatz in Schienenverkehrsanlagen so weiter zu entwickeln, dass ein wirtschaftlicher und wirkungsvoller Einsatz von Hochspannung zur Bekämpfung von unerwünschtem Pflanzenbewuchs bei Fahrtgeschwindigkeiten ermöglicht wird, der die Probleme und Nachteile der chemischen und thermisch/mechanischen Bekämpfung für einen Großteil der Flächen nicht hat.

Diese Aufgabe wird mit einer Vorrichtung gemäß Anspruch 1 gelöst. Die Vorrichtung weist eine Fördereinrichtung für die Bewegung der Vorrichtung, eine Hochspannungsquelle und einen mit der Hochspannungsquelle elektrisch verbundenen Applikator auf, wobei der Applikator eine sensorgeführte Höhenverstelleinrichtung aufweist. Die Vorrichtung ist dadurch gekennzeichnet, dass der Applikator mindestens ein Band aufweist, das als Endlosband über beabstandete Rollen geführt ist.

Vorteilhafte Weiterbildungen sind Gegenstand der Unteransprüche.

Das Band bewegt sich dabei vorzugsweise in der Richtung der Fördereinrichtung, sodass die beabstandeten Rollen hintereinander angeordnet sind. Ein derartiges Band kann an die Relativgeschwindigkeit zwischen der Vorrichtung und der zu bearbeitenden Oberfläche angepasst werden, indem die Umfangsgeschwindigkeit des Bandes angepasst wird.

Ein Band hat darüber hinaus den Vorteil, dass die beabstandeten Rollen in einem unterschiedlichen Abstand zur bearbeiteten Fläche angeordnet werden können. Wenn beispielsweise die vordere Rolle einen größeren Abstand zum Untergrund aufweist als die hintere Rolle, stehen höhere Pflanzen länger mit dem Band in Berührung als niedere Pflanzen. Durch die Dauer wird somit die Beaufschlagung größerer Pflanzen zeitlich verlängert.

Die sensorgeführte Höhenverstelleinrichtung der Applikatoren erschließt eine Reihe von Anwendungen, insbesondere im Eisenbahnbereich, wo Verkehrsflächen und angrenzende Bereiche, insbesondere Schotterflächen und die direkt daran angrenzenden Kontrollwege und Abstandsflächen von unerwünschten Pflanzenbewuchs freizuhalten sind. Im Bereich von Gleisen oder Verkehrswegen geht es sowohl um den Verkehrsweg selber als auch um Kontrollwege, die aus technischen Gründen für den Verkehr notwendig sind, und um die Sicherheitsabstände zu Bäumen, deren Bewuchs kontrolliert und eingedämmt werden muss..

Beim Einsatz von Hochspannung werden schleifende oder über den Schienen und Schwellen schwebende, festliegende Stromapplikatoren oder Ketten eingesetzt, die bei langsamer Fahrt und hoher elektrischer Leistung zu einer Einschränkung des Pflanzenbewuchses führen. Diese Vorrichtungen führen jedoch aufgrund der geringen Zahl unabhängig gesteuerter Applikatoren und der zum Teil mangelnden örtlichen Führung (schlagende Ketten, vibrierende Schleifapplikatoren) zu extrem ungleichmäßiger elektrischer Leistungsabgabe, sodass Flächen mit ungleichmäßigem Bewuchs nicht angemessen behandelt werden bzw. ganze Bereiche unbehandelt bleiben. Als Stromapplikatoren verwendete Bleche und Ketten erreichen in den meisten Fällen keine kleinen Pflanzen besonders zwischen höherliegenden Schwellen. Sie schlagen bei niedriger Anordnung permanent gegen jede Schwelle und sie geraten durch stoßbedingtes Taumeln und Vibration leicht in Berührung mit den Schienen, Weichen, Verschraubungen und der wachsenden Zahl anderer technischer Einbauten. Daher ist mit derartigen Applikatoren nur eine sehr niedrige Fahrgeschwindigkeit möglich und höhere Geschwindigkeiten führen zu einem massiv vergrößerten Verschleiß und Schadensrisiko an den Applikatoren und der Verkehrsinfrastruktur.

Die Sensor-geführte Höhenverstelleinrichtung für den Applikator führt dazu, dass die Applikatoren mittels der sensorgeführten Höhenverstelleinrichtung während der Fahrt beispielsweise an unterschiedliche Höhen des Bewuchses und insbesondere von Einbauten automatisch mit hoher Geschwindigkeit angepasst werden können. Dies ermöglicht es, je nach Bewuchs und technischen Einrichtungen auf der zu befahrenen Strecke automatisch die Höhe des Applikators optimal einzustellen. Dadurch kann die Fahrtgeschwindigkeit der Fördereinrichtung erhöht werden und der Applikator kann in einer kontinuierlich angepassten Höhe oberhalb der zu bearbeitenden Oberfläche positioniert werden, um Kollisionen zu vermeiden. Die Höhenverstelleinrichtung wird vorzugsweise pneumatisch eingestellt. Hierzu kann in einem ziehharmonikaartigen, luftdichten Kunststoffbalg eine zusammenziehende Rückstellfeder sitzen. Wenn der Balg mit Druckluft beaufschlagt wird, verlängert er sich nach unten und durch die Feder wird Hochspannung auf eine Kontaktplatte an der Unterseite des Applikators geleitet. Die Unterseite kann in Fahrtrichtung angeschrägt sein, damit größere Pflanzen länger Kontakt haben und besser and dem Applikator vorbestreichen. Der Befüllungsgrad des Balgs bzw. dessen Länge können elektronisch überwacht und gesteuert werden, um Hindernissen auszuweichen, die von Höhensensoren erkannt wurden. Eine matrixartige Anordnung, bei der in einem Raster eine größere Zahl von einzeln steuerbaren Applikatoren in Fahrtrichtung nebeneinander und hintereinander angeordnet sind, ermöglicht lange Kontaktzeiten ohne Bodenberührung und der Schaden wird im Kollisionsfall minimiert, wenn die Konstruktion elastisch ist und spätestens nach Platzen des Balges nach oben zurückschnellt.

Derartige Balge können neben der Nutzung für Schleifapplikatoren auch dazu benutzt werden, ein Bandsystem, welches erfindungsgemäß als Applikator benutzt wird, insgesamt oder über einzelne Segmente herunterzudrücken.

Bei einer derartigen Vorrichtung ist es vorteilhaft, wenn der Applikator weiterhin mindestens eine Bürste aufweist. Eine Bürste kann relativ nah an die zu behandelnde Oberfläche herangeführt werden, da die Borsten einem Widerstand aufgrund ihrer geringeren Masse besser nachgeben und elastisch ausweichen, aber sich dann auch bedingt durch die Dämpfung und Stützung im Borstenverbund in die Ursprungsposition zurückbegeben. Die Oberfläche kann unkontrolliert rau (Schotter) und erheblich profiliert (Schwellen) sein. Der Luftwiderstand der Bürste, die Beweglichkeit der Borsten und die Selbstreinigungsfähigkeit der Bürste lassen sich durch eine geeignete Orientierung der Borsten mit gerader oder leicht nach hinten gerichteter Anordnung und geometrische Anordnung der Bürstenreihen mit schrägen Reihen und schneckenartig angeordneten Zwischenräumen besonders gut örtlich kontrollieren. Sofern die Borsten jedoch zu stark mit aus der Oberfläche vorstehenden feststehenden Teilen der Eisenbahninfrastruktur, Müll oder Pflanzen kollidieren, nutzen sich die Borsten zu schnell ab und Einrichtungen können beschädigt werden. Daher ermöglicht die Höhenverstelleinrichtung die Anwendung eines Bürstenapplikators insbesondere mit relativ langen Borsten oder Borstenbündeln auch bei höheren Geschwindigkeiten der Fördereinrichtung relativ zur bearbeiteten Fläche, insbesondere wenn höhere Einbauten wie Signalanlagen oder Weichenprofile übersprungen werden müssen bzw. unvermeidbare Kollisionen möglichst verschleißarm erfolgen müssen.

Die Erfindung betrifft, insbesondere für die Erreichung der dauerhaften Wirksamkeit bei hohen Geschwindigkeiten, auch ein Verfahren zur Verwendung einer derartigen Vorrichtung, bei dem der Applikator mittels der Fördereinrichtung über eine Bodenfläche bewegt wird und relativ zur Fördereinrichtung bewegt wird, wobei die Geschwindigkeit des Applikators relativ zur Bodenfläche abhängig von der Lateralgeschwindigkeit der Fördereinrichtung relativ zur Bodenfläche verändert wird. Dies ermöglicht es, die Relativgeschwindigkeit zwischen Applikator und überstreiftem Bewuchs auf eine Geschwindigkeit zu optimieren, die zumeist kleiner ist als die Bewegung der Gesamtvorrichtung relativ zur zu behandelnden Bodenfläche. Dadurch werden die mechanische Beanspruchung des Applikators und der Infrastruktur verringert, Kollisionsschäden minimiert und die Wirksamkeit der Applikatoren wird unabhängig von der aus betriebstechnischen Gründen wechselnden Lateralgeschwindigkeit der Fördereinrichtung relativ zur Bodenfläche erhöht. Der Applikator weist erfindungsgemäß ein Band auf, das als Endlosband über beabstandete Rollen geführt ist. Das Band bewegt sich dabei vorzugsweise in der Richtung der Fördereinrichtung, sodass die beabstandeten Rollen hintereinander angeordnet sind. Ein derartiges Band kann an die Relativgeschwindigkeit zwischen der Vorrichtung und der zu bearbeitenden Oberfläche angepasst werden, indem die Umfangsgeschwindigkeit des Bandes angepasst wird.

Bei einer derartigen Vorrichtung ist es vorteilhaft, wenn der Applikator weiterhin mindestens eine mit dynamisch einstellbarer Geschwindigkeit rotierenden Bürste aufweist. Damit wird es ermöglicht, die Borstengeschwindigkeit relativ zur Pflanze (und der Gleisanlage) für einen optimierten Stromübergang und eine ausreichende Kontaktzeit vor einem Passieren oder einem eventuellen Abreißen der Pflanze unabhängig von der operativ bedingt wechselnden Geschwindigkeit des Transportfahrzeuges optimal einzustellen. Durch die optimierte Wahl der Drehgeschwindigkeit für die verschiedenen Bürstentypen kann auch der Kontakt zum Schotter oder den Schwelle so optimiert werden, dass die Abrasion an allen Elementen minimiert wird. Eine rotierende Bürste kann ein ganzes Stück in die obere Störkontur der zu behandelnden unkontrolliert rauen (Schotter) und erheblich profilierten (Schwellen, Schienenbefestigen, Einbauten) Oberfläche hineingeführt werden. Die Borsten einer sich entsprechend drehenden Bürste berühren die Objekte oft mit weniger als 1/10 der Geschwindigkeit stehender Bürsten und können deshalb noch viel besser eleatisch ausweichen oder in Pflanzen eindringen. Die geringere Auslenkung und Vibration der Borsten und die noch besser funktionierende Dämpfung im Bürstenverband führt dazu, dass sich die Borsten besonders schnell in die Ursprungsposition zurückbegeben und damit deutlich besser örtlich kontrollieren lassen. Damit kann näher an Metallteilen Unkraut ohne Überschlagsgefahr entfernt werden. Da drehende Bürsten durch eine entsprechende Borstenanordnung Unkraut gezielt in eine Richtung lenken können, kann auch mit nichtleitenden Borsten in Randbereichen Unkraut in Richtung elektrischer Kontakte gezogen werden, um damit die Reinigungsleistung zu verbessern. Mit einer Luftführung durch einen Borstenbesatz mit hohem Luftwiderstand oder eine schneckenartige Luftführung kann gerade durch den Lastwechsel des Luftwiderstandes an der Ober- und Unterseite der Bürste abgerissenes Blattmaterial gezielt aus dem Boden entfernt und ggf. nach außen ausgetragen werden. Sofern die Borsten jedoch zu stark mit aus der Oberfläche vorstehenden feststehenden Teilen der Eisenbahninfrastruktur, Müll oder Pflanzen kollidieren, nutzen sich die Borsten trotzdem zu schnell ab und die Einrichtungen können beschädigt werden. Daher ermöglicht gerade die Höhenverstelleinrichtung in Kombination mit der Anwendung eines drehenden Bürstenapplikators hohe Geschwindigkeiten der Fördereinrichtung relativ zur bearbeiteten Fläche, insbesondere wenn höhere Einbauten wie Signalanlagen oder Weichenprofile übersprungen werden müssen bzw. unvermeidbare Kollisionen möglichst verschleißarm erfolgen müssen.

Da sich die drehende Bürste an der Fahrtrichtungsseite nach oben bewegt, werden die Bereiche möglicher Plasmabildung und Erwärmung der Applikatoroberfläche durch den Fahrtwind massiv reduziert und in die immer enger stehenden Borsten hineingedrückt. Dadurch können Abreißfunken ohne zusätzlichen Aufwand intrinsisch minimiert werden.

Sowohl bei zylinderförmigen Bürsten als auch bei einem Endlosband ist es vorteilhaft, wenn der Applikator eine Rolle aufweist, innerhalb der die Hochspannungsquelle angeordnet ist. Vorzugsweise wird der Applikator durch diese Rolle angetrieben. Dies führt zu einem besonders kompakten Aufbau.

Da die Leitfähigkeit von Borsten oder eines Bandes durch Feuchtigkeit verbessert werden kann, wird vorgeschlagen, dass die Vorrichtung Wasserdüsen aufweist. Diese Wasserdüsen können in die Applikatoren hinein oder auf einen Ort in Fahrtrichtung davor gerichtet sein.

Weitere nach unten gerichtete Wasserdüsen, die auch unter einer sensorgesteuerten höhenflexiblen Abdeckung angeordnet sein können, können auch Dampf oder Heißwasser auf Pflanzen sprühen, um diese zu zerstören oder zumindest im Wachstum einzuschränken. Die Nutzung von Heißwasser oder Dampf zur Abtötung von Pflanzen ist bekannt. Das Verfahren ist sehr energieaufwändig und wird deshalb zumeist bei sehr langsam fahrenden Straßenfahrzeugen eingesetzt, wo es insbesondere die oberirdischen Pflanzenteile abtötet. Bei dem hier erfindungsgemäß beschriebenen Verfahren wird Heißwasser oder Dampf erst gesprüht, nachdem alle über das Schienenprofil hinausragenden Pflanzen elektrophysikalisch oder mechanisch abgetötet oder abgeschnitten wurden. Das Verfahren mit Heißwasser oder Dampf ist vor allem in Kombination mit der Hochspannungsbehandlung relevant oder in Fällen, in denen eine Hochspannungsbehandlung alleine aus räumlichen oder technischen Gründen nicht angewandt werden kann und mit dieser Methode der Einsatz von chemischen Stoffen weiter reduziert oder komplett vermieden werden kann. Darüber hinaus ist erfindungswesentlich, dass es keine weitere Energiequelle für die Heißwasser- bzw. Dampfbereitstellung benötigt wird, da die Energie erfindungsgemäß dem Kühlwasser und/oder einem Wärmetauscher im Abgasstrom der stromproduzierenden Generatoreinheit entnommen wird. Das zwischengespeicherte Wasser/Nassdampf kann dann sehr kurzfristig in großer Menge z. B. im Schotterbett eingesetzt werden. Der konzentrierte Einsatz, der ggf. durch Abdeckhauben noch weiter fokussiert wird und sensorgesteuert auf pflanzenbewachsene Bereiche konzentriert wird, erlaubt eine effiziente und wirksame Nutzung der Abwärme im Sinne der Kraftwärmekopplung.

Um die Vorrichtung optimal an die zu bearbeitende Oberfläche anzupassen wird vorgeschlagen, dass der Applikator Bürsten oder Bandsegmente aufweist, die relativ zueinander beweglich angeordnet sind. Vorzugsweise ermöglicht eine Mechanik die Veränderung der Position der Segmente während der Bewegung der Vorrichtung über der Oberfläche. Diese Segmente ermöglichen es, einen Applikator für die Bearbeitung einer geformten Oberfläche wie beispielsweise eines Bahndamms optimal anzupassen. Außerdem können auf dem Band Borsten oder Oberflächenstrukturen vorgesehen werden, die als flexible Elemente den Kontakt zwischen dem Band und den Pflanzen verbessern.

Besonders vorteilhaft ist es, wenn die Applikatorsegmente getrennt voneinander mit der Hochspannungsquelle verbunden sind. Dies ermöglicht es, die Segmente zu unterschiedlichen Zeiten, mit unterschiedlicher und ggf. wechselnder Polarität oder mit unterschiedlicher Intensität mit Hochspannung zu versorgen, um auf eine durch Sensoren ermittelte Situation möglichst schnell individuell reagieren zu können. Damit kann z. B. die Tiefenwirkung der Applikatoren in Bezug auf dem Pflanzenwuchs und den Bodenwiderstand/Energieverbrauch geregelt und gesteuert werden. So können Applikatoren bei hoher Pflanzendichte sehr energiesparend und wirkungsvoll als Pflanze-Pflanze Applikator eingesetzt werden, bei niedriger Pflanzendichte (Sensoren/Stromcharakteristik der einzelnen Applikatoren als Erkennung) kann z. B. ein Applikator bis auf das Bodenmaterial, bevorzugt auf dem feinkörnigeren und ggf. besser leitenden Begehungsweg abgesenkt werden und als besserer leitender Erdapplikator dienen.

Die Applikatorsegmente können derart nebeneinander angeordnet werden, dass mehrere Segmente einen Bogen bilden, der beispielsweise U-förmig mit in unterschiedlichen Winkeln anordenbaren Schenkeln ausgebildet ist. Somit können die Applikatoren beispielsweise bei einem Bahndamm den mittleren Gleisbereich und die seitlichen Böschungsbereiche überfahren und jeweils in ihre Höhe an die aktuelle Situation angepasst werden.

Einerseits kann mit mehreren Applikatoren eine profilierte Oberfläche wie beispielsweise eine Dachform gebildet werden. Andererseits kann jedoch auch der Applikator selber eine profilierte Oberfläche aufweisen. So können beispielsweise die Borsten einer Bürste derart unterschiedlich lang sein, dass eine Walzenbürste an den Rändern längere Borsten aufweist als im mittleren Bereich.

So können Bürsten beispielsweise im Bereich neben dem Gleisbett über sehr lange Borsten, gegebenenfalls mit entsprechenden Stabilisierungen verfügen, damit sie bei der Berührung von festen Objekten ausweichen können, während sie in einem mittleren Bereich oberhalb der Gleise kürzere Borsten aufweisen.

Eine besondere Bürstenform verfügt über sehr lange und besonders nahe der Zentralachse materialtechnisch oder durch eine mechanische Vorrichtung befestigte flexible Borsten, die sich mechanisch gesteuert oder insbesondere in Abhängigkeit von der Umdrehungsgeschwindigkeit aufrichten und den Kontakt zum Boden herstellen. Dies ermöglicht eine freie Anpassung der Oberflächenkonturen und einen schnellen Rückzug der Borsten aus Kollisionsbereichen durch ein schnelles Abbremsen der Bürste.

Auch bei hohen Fahrgeschwindigkeiten gibt es Bereiche, die mit Sicherheit kollisionsfrei sind. In diesen Bereichen können auch Drähte und Schneiden als Stromapplikatoren eingesetzt werden, die unter Strom stehend mit diesen Drähten oder Schneiden in Berührung kommende Pflanzen in einem oder mehreren Schnitten mit Strom beaufschlagen und somit fast zeitgleich die Oberteile abtrennen.

Ein besonders bevorzugtes Einsatzgebiet ist die Verwendung der Vorrichtung mit einem Schienenfahrzeug als Fördereinrichtung. Die Nutzung anderer Fördereinrichtungen wie Radfahrzeuge, Raupen-/Kettenfahrzeuge, Drohnen, Schreitfördereinrichtungen etc. insbesondere im Bereich beliebiger verkehrstechnischer Anlagen ist gleichermaßen möglich.

Insbesondere bei Schienenfahrzeugen werden Drehgestelle vorgesehen. Daher wird vorgeschlagen, dass für den Fall, dass die Fördereinrichtung ein Drehgestell aufweist, der Applikator am Drehgestell befestigt ist. Dies ermöglicht es, Applikatorsysteme in den Zwischenbereichen zwischen Trägerwagons anzuordnen.

Kumulativ oder alternativ kann der Applikator auch zwischen zwei Drehgestellen angeordnet werden. In diesem Fall ist eine Seitenanpassungssensorik vorteilhaft.

Besonders vorteilhaft ist es, wenn die schienengebundene oder schienenungebundene Fördereinrichtung für Arbeiten insbesondere außerhalb des Gleisbetts über die Höhenverstellbarkeit der Applikatoren hinaus einen oder mehrere aktorische Roboter aufweist, die das Bewegen der Vorrichtung steuern. Dadurch entstehen bewegte teilautonome oder auch autonome Behandlungsroboter.

Dadurch entsteht letztlich eine Vorrichtung zur Behandlung von Pflanzenbewuchs mit einem Generator, einer Hochspannungseinheit, einer Steuerung und mindestens einem beweglichen Stromapplikatorpaar auf Bürsten- oder Schleifkontaktbasis, die mit anderen mechanischen Einrichtungen, beispielsweise zum Mähen, Schneiden, Saugen und Blasen, kombiniert sein kann, um beispielsweise auch Brombeerranken oder andere größere Pflanzenteile bei oder nach deren Abtötung mit Strom mittels einer Greifervorrichtung zu erfassen, die die Ranke zuerst festhält und unter Strom setzt und dann abschneidet.

Besonders vorteilhaft ist es, wenn die Vorrichtung auch eine mechanische Einrichtung zum Abtöten oder Schwächen von Pflanzen oder anderen Organismen über chemische oder physikalische Verfahren aufweist. Gerade die Kombination von Hochspannung mit chemischem Pflanzenschutz oder weiteren physikalischen Verfahren zum Abtöten oder Schwächen von Pflanzen bietet die Möglichkeit, bereits bei einem einmaligen Überfahren einer Fläche eine den Vorgaben entsprechende flächendeckende Beeinträchtigung des Pflanzenwuchses auf sehr unterschiedlichen Untergründen und in Bereichen mit sehr unterschiedlichen infrastrukturseitig oder regulatorisch bedingten Bekämpfungsbeschränkungen zu bewirken.

Erfindungsgemäß wird dabei mit Priorität das Hochspannungsverfahrens eingesetzt entweder bis nahe auf den Boden oder, wo dies nicht möglich ist, bis kurz oberhalb der Störkanten. Dadurch werden auch bei Kombinationsanwendungen am gleichen Ort hohe tiefwurzelnde Pflanzen zuerst elektrophysikalisch abgetötet und ggf. wird durch Bürsten oder andere Applikatoren noch die hochstehende Biomasse massiv verringert.

Danach wird auf die nicht durch Hochspannung erreichbaren, aber nach der Vorbehandlung besser zugänglichen Bereiche insbesondere die aufgerissenen Pflanzenschnittstellen eine minimierbare Menge an chemischen Wirkstoffen gesprüht oder andere Verfahren wie Heißwasser oder Dampf erreichen jetzt deutlich besser (mit weniger Vorabkühlung) die bisher nicht erreichten kleineren, zumeist auch weniger tief wurzelnden Pflanzen. Bei der räumlich alternierenden Nutzung werden genau die Bereiche, die durch Hochspannung nicht erreicht wurden aber ggf. sogar durch eine Sensorik des Pflanzenbestandes erkannt wurden, selektiv ausschließlich mit chemischen oder physikalischen Methoden behandelt.

Besondere Möglichkeiten der Weiterbildung der Vorrichtung werden dadurch erschlossen, dass sie einen Datenspeicher aufweist, der mit einer Steuereinrichtung in Verbindung steht, die mit der Höhenverstelleinrichtung in Verbindung steht. Dies ermöglicht es, Geoinformationen zur Anlagensteuerung zu verwenden. Dadurch können auf der Grundlage von Geoinformationen die Arten der Unkrautbekämpfung wie chemisch, mechanisch oder thermisch gesteuert werden. Die Daten können auf der Grundlage von Streckenbaudaten oder regulatorischen Daten aus Wasser- und Naturschutzvorgaben ermittelt werden. Weitere Möglichkeiten bilden lokalisierte Eingaben aus automatischen Sensordaten, die den Unkrautbewuchs auf der Strecke ermitteln, oder aus Anlagendaten wie dem Energieverbrauch, auf der Grundlage von Spannungsprofilen, dem Sprühmittelverbrauch und anderen Messfahrten.

Um die Vorrichtung weiter zu schonen und optimal einzusetzen, wird vorgeschlagen, dass zu der zu behandelnden Fläche Daten gesammelt werden und die Hochspannungsquelle und/oder die Höhenverstelleinrichtung auf der Grundlage der ermittelten Daten gesteuert werden.

Diese Daten können aus unterschiedlichen Datenquellen stammen. Vorteilhaft ist es, wenn während der Verwendung der Vorrichtung Daten zum Einsatz der Vorrichtung und/oder zu den zu behandelnden und/oder den behandelten Flächen gesammelt werden. Dies ermöglicht es, den Datensatz immer weiter zu verbessern, um jeweils bei dem nächsten Behandlungsschritt auf diese Daten zugreifen zu können.

Außerdem können manuelle Eingaben von mobilen Datenerfassungsgeräten bei Messfahrten oder Kontrollgängen auf besondere bauliche Daten, spezielle Pflanzenarten und insbesondere resistente Arten hinweisen. Derartige Daten können auch über Drohnenflüge ermittelt werden, die vorab oder zeitgleich mit der Behandlung erfolgen.

Diese zeit- und georeferenzierten Daten können auch durch technische Geräte zur Realitätserweiterung (augmented reality, 3D Brillen, Einspiegelungen), automatische Beleuchtungsführung zur Markierung und als Arbeitslicht etc. unterstützt werden. Auch bei späteren Begehungen mit unabhängigen Geräten in der komplexen, sich durch den Vegetationsfortschritt verändernden Umgebung kann sich der Nutzer mittels der transferierten Zeit- und Ortsdaten die früheren Behandlungsflächen in ein Kamera-Livebild virtuell einfügen lassen, um den Behandlungserfolg besser kontrollieren zu können bzw. weitere Behandlungen manuell zu initiieren bzw. automatisch robotisch ausführen zu lassen.

Weitere Vorteile bietet ein physikalisches Modell der Fördereinrichtung, um durch automatische kontextbasierte Zuordnungen der Geodaten und anderer Anforderungsinformationen jeweils optimale Vernichtungsmethoden und -abläufe zu ermöglichen, wobei z. B. Brems-, Beschleunigungs- und Rüstzeiten berücksichtigt werden.

Das Ermitteln der Produktivdaten kann auch die Grundlage für ein Abrechnungssystem für Lizenzkosten für die Hochspannungsbehandlung und anderer Bearbeitungsschritte bilden, um Geodaten und Informationen über die gefahrenen Strecken, Pflanzendichten etc. als Basis für eine Abrechnung zu verwenden.

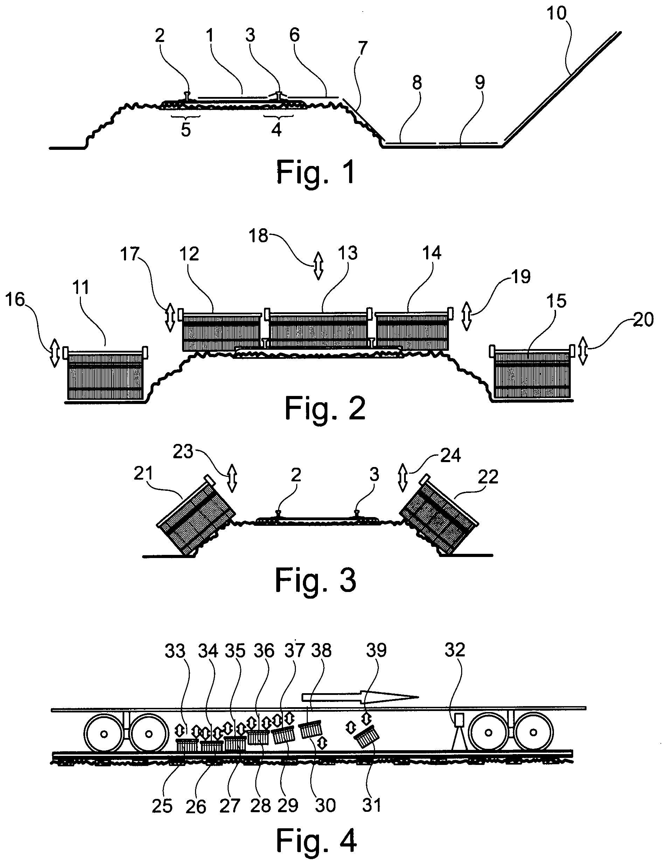

Vorteilhafte Ausführungsbeispiele sind in der Zeichnung beschrieben und werden im Folgenden näher erläutert. Die Ausführungsbeispiele der Figuren 2-17 und 19-29 weisen keinen Bandapplikator auf und sind somit nicht gemäß der Erfindung. Sie dienen jedoch dem besseren Verständnis der Erfindung. Es zeigt:
- Figur 1: einen Querschnitt durch einen Bahndamm mit unterschiedlich zu bearbeitenden Bereichen,
- Figur 2: eine schematische Ansicht eines Querschnitts eines Applikators über Zug und Bahndamm und Gleisbett hinweg,
- Figur 3: eine schematische Ansicht eines Querschnitts eines Applikators an den Schotterflanken,
- Figur 4: eine sensorbasierte Höhenverstellung für hier geschlitzte oder bürstenartige Schleifapplikatoreinheiten,
- Figur 5: eine Unteransicht einer ersten Ausführungsform einer statischen Bürste mit schräg stehende Borstenreihen als Fortentwicklung von geraden axialen Borstenreihen,
- Figur 6: eine Unteransicht einer zweiten Ausführungsform einer statischen Bürste mit schräg stehende Borstenreihen,
- Figur 7: schematisch die Funktion von schrägen Borsten oder Borstenbündeln,
- Figur 8: eine schematische Darstellung der Bewegungsdynamik einer sich drehenden Bürste,
- Figur 9: perspektivisch eine schneckenartige Anordnung der Borstenbündel,
- Figur 10: eine Vorderansicht des in Figur 9 gezeigten Borstenbündels,
- Figur 11: perspektivisch ein Borstenbündel mit schrägen Borsten am Rand,
- Figur 12: einen Querschnitt drehender Bürsten in Anwendungsposition auf einem Gleis,
- Figur 13: eine schematische 3D Darstellung eines Bürstenrandes mit Borsteneinheiten mit Randeinzug
- Figur 14: eine schematische Darstellung des Lastwechsels an festhaftenden Objekten,
- Figur 15: eine schematische Darstellung einer Reihe nebeneinander liegender rotierender Bürsten,
- Figur 16: eine schematische Darstellung mit zusätzlich versetzt zueinander liegenden rotierenden Bürsten,
- Figur 17: eine schematische Darstellung aller rotierenden Bürsten im direkten Verkehrswegebereich,
- Figur 18: eine schematische Darstellung eines Bandapplikators mit höhenverstellbaren Rollen, gemäß der vorliegenden Erfindung,
- Figur 19: eine schematische Ansicht eines balgbasierten Satzes von Schleifapplikatoren,
- Figur 20: eine Bürste mit eingefahrenen Borsten,
- Figur 21: die in Figur 20 gezeigte Bürste mit ausgefahrenen Borsten,
- Figur 22: eine schematische Darstellung eines höhenabgestuften Satzes höhenverstellbarer Schneiden oder Drähte,
- Figur 23: schematisch ein auf Kraftwärmekopplung basierendes mobiles Bereitungs- und Speichersystem für Heißwasser oder Nassdampf,
- Figur 24: einen schematischen Querschnitt durch den Verkehrsbereich mit der Darstellung eines Applikators, der robotisch gesteuert an einen auf oder neben den Schienen befindlichen Fahrzeug angeordnet ist,
- Figur 25: eine schematische Darstellung eines sensorgesteuerten Fahr und Applikationsroboters,
- Figur 26: ein Ausbringungssystem für Heißwasser oder Dampf,
- Figur 27: eine Seitenansicht einer Bürste mit langen, im zentralen Bereich stabilisierten Borstenleisten,
- Figur 28: eine Vorderansicht der in Figur 27 gezeigten Bürste und
- Figur 29: schematisch einen Querschnitt durch mit unterschiedliche Borstenlängen profilierte Walzenbürsten.

Der in Figur 1 gezeigte Querschnitt durch einen Bahndamm zeigt unterschiedliche Bereiche, die mit der erfindungsgemäßen Vorrichtung bearbeitet werden können. Dies sind der Schwellenbereich 1 zwischen den Schienen 2, 3, der Zwischenschwellenbereich 4, 5 der Schienenbefestigungen, der Außenbereich 6 der Schwellen, die Schotterflanke 7, der Betriebswegebereich 8, die waagerechte Abstandsfläche 9 und die ansteigende Abstandsfläche 10, an deren Stelle auch eine abfallende Abstandsfläche, eine Stützmauer oder ein Graben vorgesehen sein kann.

Die Figur 2 zeigt Schleifapplikatoren 11 bis 15, die entsprechend den Pfeilen 16 bis 20 auf und ab bewegt werden können. In Richtung der Schienen 2, 3, zu den Applikatoren 11 bis 15 versetzt, sind die in Figur 3 gezeigten Applikatoren 21 und 22 angeordnet, die gemäß den Pfeilen 23, 24 auf und ab bewegt werden können.

Die Figur 4 zeigt mehrere höhenverstellbare Applikatoren 25 bis 31, die wie die zuvor beschriebenen Applikatoren mit einer Hochspannungsquelle (nicht gezeigt) in Verbindung stehen und die entsprechend dem Signal des Sensors 32 mit Höhenverstelleinrichtungen 33 bis 39 entsprechend dem vom Sensor ermittelten Höhenprofil auf und ab bewegt werden können. Dies ermöglicht eine kontinuierliche Einstellung der Höhe der Applikatoren entsprechend dem Untergrund und der Stärke des Pflanzenbewuchses.

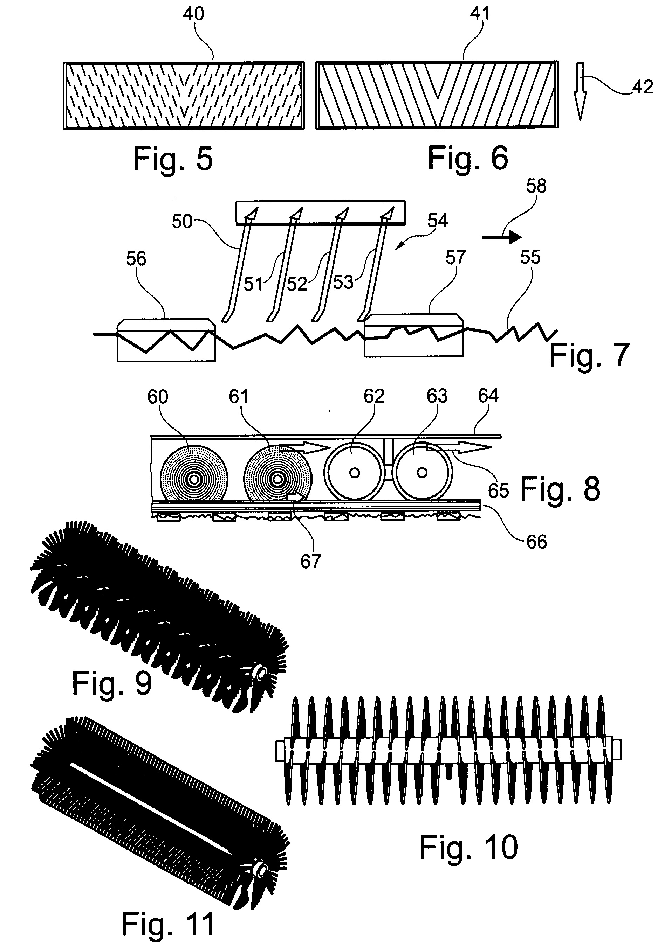

Die in den Figuren 5 und 6 gezeigten Bürsten, haben v-förmig angeordnete Bürstenreihen, die dafür sorgen, dass bei einem gleichmäßigen Überstreichen einer Oberfläche ausgerissenes Material nach Außen gefördert wird. Bei einer schnellen Bewegung der Bürsten 40, 41 in Richtung des Pfeiles 42 entsteht ein Luftstrom, der das Material nach Außen fördert und ein Verstopfen der Bürste verhindert.

Die Figur 7 zeigt schematisch die in Fahrtrichtung nach hinten stehenden Borsten 50 bis 53 des Borstenbündels 54, die über das Schottermaterial 55 und die Schwellen 56 und 57 in Fahrtrichtung 58 geführt werden. Die nach hinten stehenden statischen Borsten verringern die Abrasion der Schwellen 56 und 57 und erhöhen gleichzeitig die Kontaktfläche der Borsten 50 bis 53 mit dem Schotter 55 und dort wachsenden Pflanzen (nicht gezeigt).

Die in Figur 8 gezeigten sich drehenden Bürsten 60, 61 drehen sich etwas langsamer als die Räder 62 und 63. Dadurch wird die Vorrichtung 64 gemäß der Richtung 65 über das Gleis 66 bewegt und die Borsten der Bürsten 60 und 61 wirken entsprechend dem Pfeil 67 langsamer auf den Untergrund und üben somit eine Kraft auf den Untergrund aus, die zu einer Verschiebung von Objekten auf den Untergrund in Richtung des Pfeils 67 führt.

Die in den Figuren 9 bis 11 gezeigten Borstenbündel haben zumindest schneckenartige Bereiche, in denen der Luftwiderstand der Bürsten erniedrigt wird und abgerissene Objekte mit einem Minimum an Staumöglichkeiten, bevorzugt nach Außen, durch die Bürste gefördert werden.

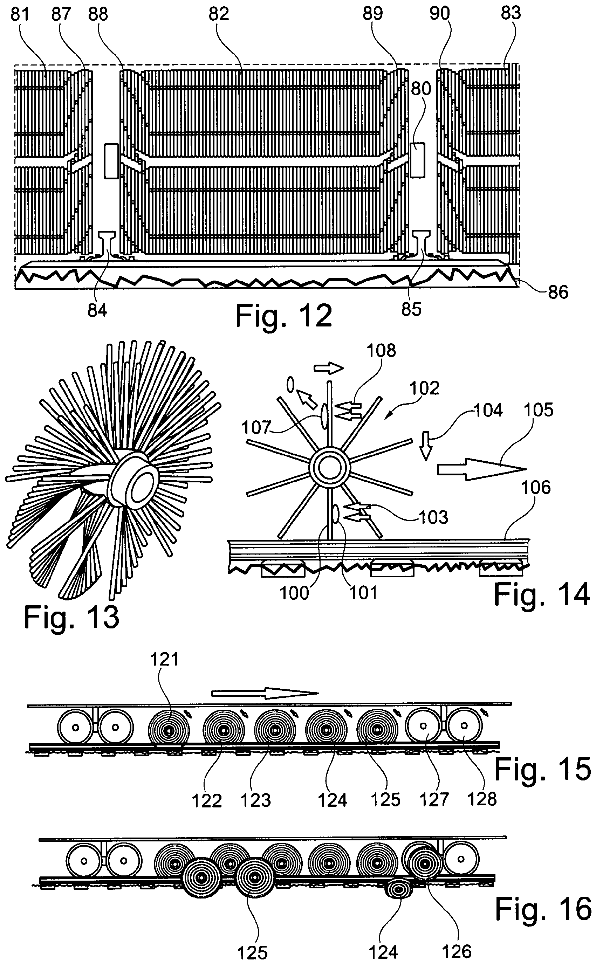

Der in Figur 12 gezeigte Querschnitt durch um eine Achse 80 rotierende Bürsten 81 bis 83 zeigt, wie die Bürsten im Bereich der Schienen 84 und 85 das Gleisbett 86 bearbeiten. Im Bereich der Befestigungen der Schienen 84 und 85 haben die Bürsten 81, 82, 83 aus isolierendem Material hergestellte Borstenreihen 87 bis 90. Dadurch wird einerseits durch die dichte Reihung der Borsten ein intensiver Kontakt zwischen den als Applikator dienenden mit Hochspannung beaufschlagten Bürsten erreicht und andererseits wird ein elektrischer Kontakt zwischen Bürste und Schiene 84, 85 vermieden. Während kleinere Pflanzen (nicht gezeigt) nur mechanisch geschädigt werden, erhalten größere Pflanzen (nicht gezeigt) eine schwächende oder zerstörende Menge an elektrischer Energie.

Die Figur 13 zeigt einen Bürstenrand mit einer speziell gedrehten Borstenanordnung. Durch die schräge Borstenposition werden am Rand der Schienen 84, 85 befindliche Materialien seitlich nach außen verschoben.

Ein an einer Borste 100 anhaftendes Objekt 101 wird im unteren Bereich der rotierenden Bürste 102 durch den Fahrtwind 103 gegen die Borste 100 gedrückt. Bei der weiteren Drehung der Bürste 102 entsprechend dem Pfeil 104 während der Bewegung der Bürste 102 entsprechend dem Pfeil 105 relativ zum Gleis 106, wandert das Partikel 101 nach oben und wird an der Stelle 107 durch den Fahrtwind 108 von der Borste 100 weggeblasen.

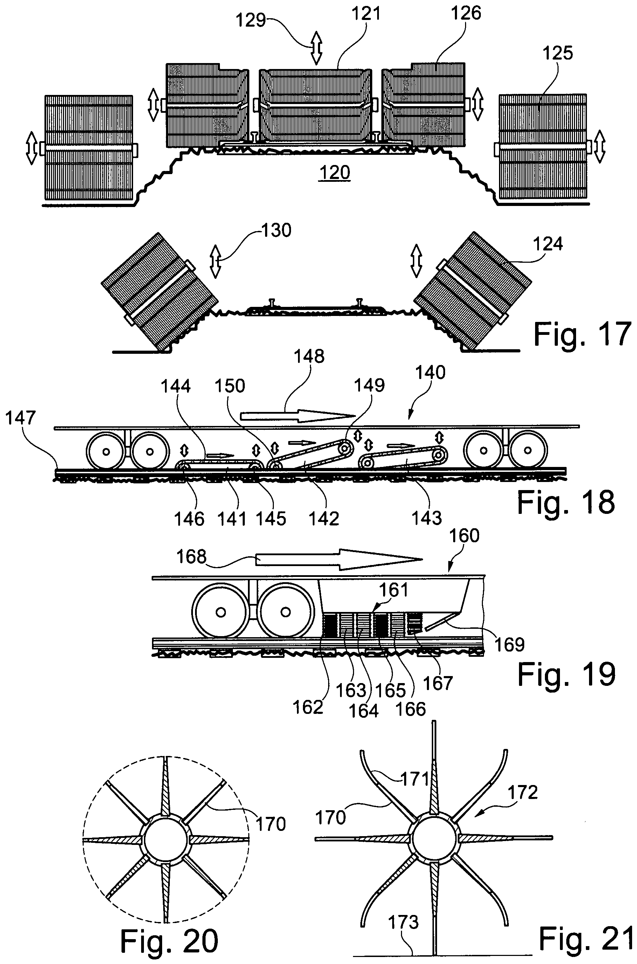

Die Figur 17 zeigt in Verbindung mit den Figuren 15 und 16, wie an einem Bahndamm 120 hintereinander angeordnete drehbare Bürsten 121 bis 125 durch weitere seitlich angeordnete Bürsten 124 bis 126 ergänzt werden können. Dabei kann eine Reihe von gleichpoligen Bürsten 121 bis 125 derart angeordnet sein, dass die Bürsten immer abwechselnd im Schwellen- und im Schotterbereich angeordnet sind. Während eine Bürste im Schwellenbereich angeordnet ist, ist somit die danebenliegende Bürste im Schotterbereich angeordnet. Dadurch kann der Energieverbrauch verringert werden, da jeweils immer nur die Hälfte der Bürsten im Schotterbereich angeordnet sind, während die andere Hälfte der Bürsten oberhalb der Schwellen angeordnet ist.

Sämtliche Bürsten können sensorgesteuert der profilierten Oberfläche von Schiene, Schwellen, Schotter und anderen Einbauten in der Höhe angepasst werden. Im Ausführungsbeispiel drehen sie sich kontrolliert etwas langsamer, aber mit gleichem Drehsinn wie die Räder 127 und 128. Die Höhenverstellmöglichkeiten der Bürsten sind mit den Pfeilen 129 und 130 (nur exemplarisch beziffert) angedeutet.

Alle Bürsten können im Bereich ihrer radial äußeren Oberfläche profiliert ausgebildet sein. Dies wird in Figur 17, beispielsweise an der Bürste 126, gezeigt. Die Anordnung des Bürstentyps 126 vor dem Drehgestell der Räder 127, 128 zeigt beispielhaft den Platz, an dem eine Seitwärtsverschiebung, wie unter dem Mittelbereich eines Drehgestellwagens zur Einhaltung der Fluchten, nicht notwendig ist.

Die in Figur 18 gezeigte Vorrichtung 140 hat mehrere Bandapplikatoren 141, 142 und 143, bei denen jeweils ein Band 144 um zwei Rollen 145 und 146 geführt ist. Diese Rollen sind derart Höhenverstellbar, dass der gesamte Bandapplikator zum Gleis 147 und vom Gleis weg bewegt werden kann oder das Band derart schräg anordbar ist, dass in Fahrtrichtung 148 die vordere Rolle 149 höher steht, als die hintere Rolle 150. Dies führt dazu, dass größere Pflanzen eine längere Kontaktzeit mit dem Band 144 des Bandapplikators haben als kleine Pflanzen und dadurch auch bei minimalem Energieverbrauch länger beaufschlagt werden. Die Bandoberfläche kann dabei glatt sein oder bürstenartig gegliedert ausgeführt werden und alle Merkmale der zuvor beschriebenen statischen und rotierenden Bürsten aufweisen.

Die in Figur 19 gezeigte Vorrichtung 160 hat einen Satz 161 an Schleifapplikatoren 162 bis 167, die einzeln angesteuert werden können, um die Höhe des Applikators zu verändern. Die aufgeblasenen Balge der Applikatoren ziehen sich durch eine innere Federkraft wieder zusammen. Dabei wird die Feder zur Energieübertragung genutzt. In Fahrtrichtung 168 vorne ist ein statischer Applikator 169 angeordnet, der hohe Pflanzen außerhalb der technischen Störkontur mit Strom beaufschlagt.

Die Figuren 20 und 21 zeigen in Hülsen 170 angeordnete flexible Borsten 171 (nur exemplarisch beziffert). Diese Borsten 171 können sich in Abhängigkeit von der Umfangsgeschwindigkeit der Bürste 172 radial in Folge der Schwerkraft oder auch mechanisch bewegt nach außen schieben, um einen Kontakt der Borsten 171 mit dem Boden 173 zu erreichen.

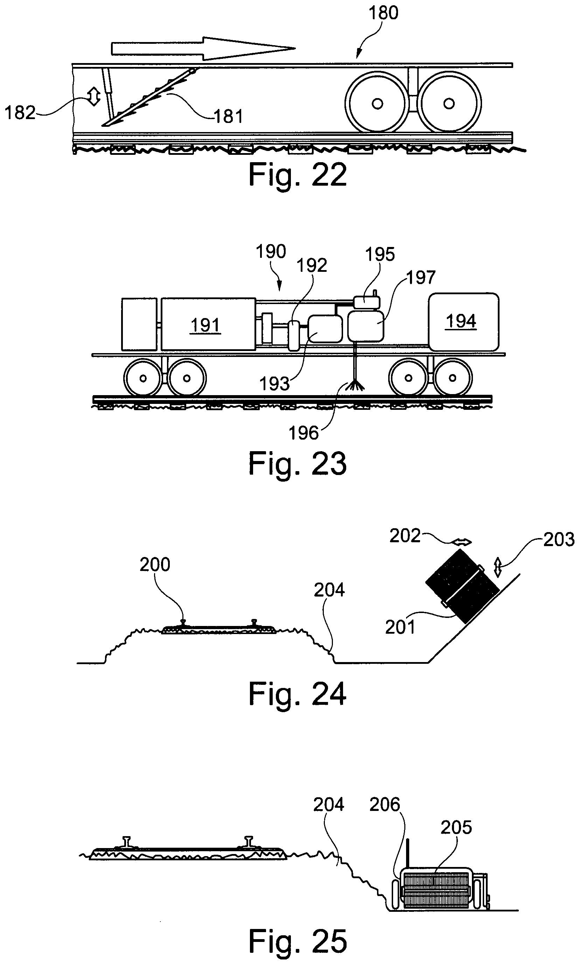

Die in Figur 22 gezeigte Vorrichtung 180 weist einen höhenabgestuften Satz höhenverstellbarer Schneiden und Drähte 181 auf, die mit Strom beaufschlagt Pflanzen abschneiden oder abreißen können und gleichzeitig mit Strom abtöten oder schwächen. Hierzu ist an der Vorrichtung 108 eine Höhenverstelleinrichtung 182 vorgesehen, die auch sensorgesteuert betrieben werden kann.

Die Figur 23 zeigt ein auf Kraft-Wärme-Kopplung basierendes mobiles Bereitungs- und Speisersystem für Heißwasser oder Nassdampf. Dabei wird das Kühlwasser des Motors 191 in einem Kreuz- oder Gegenstromwärmetauscher 192 mit Wasser aus einem Tank 194 gekühlt und das entstehende Heißwasser wird in einem Tank 193 bis zur Verwendung gelagert. Zur Erreichung von Temperaturen über 100 °C oder zur weiteren Nutzung von Abwärmeenergie, kann parallel oder nachgeschaltet das Wasser durch einen großdimensionierten Abgaswärmetauscher 195 geleitet werden, in dem das Wasser für den sofortigen Verbrauch durch die Düse 196 abgegeben wird oder überhitzt oder gegebenenfalls im überhitzten Zustand unter Druck in einem Tank 197 gespeichert wird.

Ein auf den Schienen 200 oder auch neben den Schienen 200 fahrendes Fahrzeug, kann in einem langsamen Fahrbetrieb eingesetzt werden, um robotisch mit einer Bürste 201, die gemäß den Pfeilen 202 und 203 robotisch verfahrbar ist, zwischen Schiene und Außenbahnbereich unter Umgehung von Signalanlagen und Masten diesen Bereich behandeln.

Neben dem Schotterbett 204 kann auch bei laufendem Schienenverkehr mit einem niedrigen sensorgesteuerten teilautonomen oder autonomen Fahr- und Applikationsroboter der Fahrbereich mit einer Bürste 205, die an einem Roboter 206 angeordnet ist, behandelt werden. Dabei kann das Unkraut robotisch gegriffen oder abgetötet oder abgeschnitten werden.

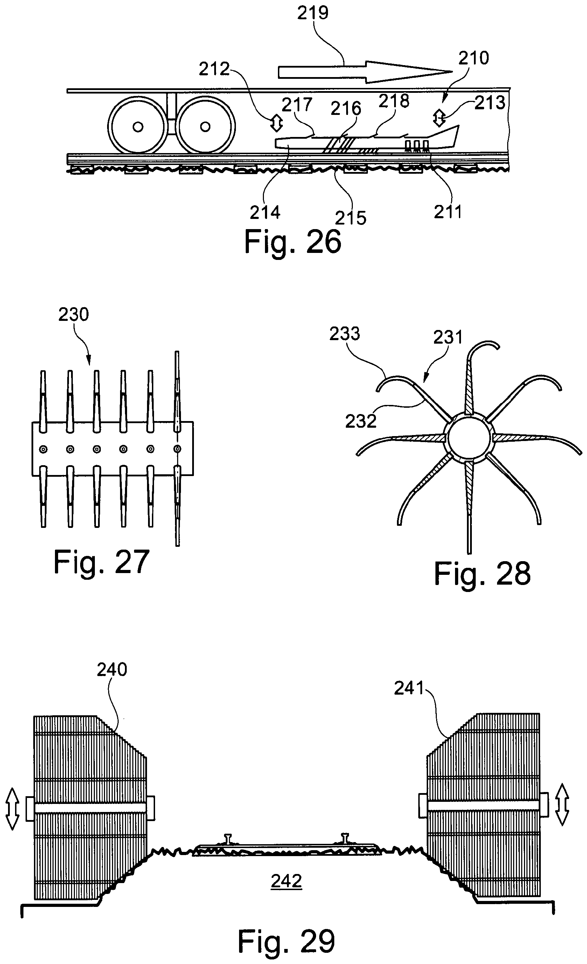

Das in Figur 26 gezeigte Ausbringungssystem 210 für Heißwasser oder Dampf 211 hat eine sensorgesteuerte Höhenanpassung 212, 213, mit der die Abdrift der höhenverstellbaren Haube 214 verringert werden kann und die Kontaktzeit zum Gleisbett 215 erhöht wird. Schräg nach unten gerichtete Borstenbündel 216 oder entsprechend angeordnete flexible Streifen, erleichtern der Höhenverstelleinrichtung 212, 213 einen minimalen Raum zwischen der Haube 214 und dem Schotterbett 215 einzustellen. Öffnungen 217, 218 an der Oberseite der Haube 214 erlauben einen Zustrom von Luft in den Bereich unterhalb der Haube 214, wodurch das ausgesprühte Heißwasser oder der Heißdampf 211 beim Fahren in Richtung 219 in das Gleisbett hineingedrückt wird.

Die Figuren 27 und 28 zeigen eine weitere Ausführungsform einer Bürste 230 mit längenverstellbaren Borsten 231, die im radial inneren Bereich 232 verstärkt sind und im radial äußeren Bereich 233 flexibel ausgebildet sind. Die Borsten 231 haben dadurch im radial inneren Bereich 232 eine höhere Stabilität als im radial äußeren Bereich 233. Auch bei dieser Ausführungsform können die flexiblen Borstenbestandteile 233 aus den mechanisch stabileren Borstenhalterungen des radial inneren Bereichs 232 mechanisch gesteuert oder in Folge der Umdrehungsgeschwindigkeit nach außen fahren, wodurch die Länge der Borsten erhöht wird, um einen guten Kontakt zum Gleisbett zu erzielen. Die Flexibilität des äußeren Bereichs 233 der Borste 231 sorgt dafür, dass die Bürste 230 nicht beschädigt wird, wenn die Borsten auf einen Widerstand aufschlagen. Diese Borsten können am radialen Umfang auch unterschiedlich lang ausgebildet sein.

Unterschiedlich lange Borsten an einer Walzenbürste ermöglichen es, wie in Figur 29 gezeigt, profilierte Walzenbürsten 240, 241 herzustellen, die optimal an die Gegebenheiten eines Gleisbetts 242 angepasst sind. Dies führt auch dazu, dass die längeren Borsten bei sich plötzlich ändernden Profilen des Gleisbetts 242 abrasionsarm weiter über die Objekte hinweggleiten, da die Flexibilität der Borsten, die Anpassung an kleinere Niveauunterschiede erleichtert.

## Patentansprüche

1. Vorrichtung (140) zum Abtöten oder Schwächen von Pflanzen und anderen Organismen, die eine Fördereinrichtung für die Bewegung der Vorrichtung, eine Hochspannungsquelle und einen mit der Hochspannungsquelle elektrisch verbundenen Applikator aufweist, wobei der Applikator eine sensorgeführte Höhenverstelleinrichtung aufweist,
**dadurch gekennzeichnet, dass** der Applikator mindestens ein Band (144) aufweist, das als Endlosband über beabstandete Rollen (145, 146, 149, 150) geführt ist.

2. Vorrichtung nach Anspruch 1, ***dadurch gekennzeichnet, dass*** der Applikator mindestens eine Bürste aufweist.

3. Vorrichtung nach einem der vorhergehenden Ansprüche, ***dadurch gekennzeichnet, dass*** der Applikator eine Rolle aufweist, innerhalb der die Hochspannungsquelle angeordnet ist.

4. Vorrichtung nach einem der vorhergehenden Ansprüche, ***dadurch gekennzeichnet, dass*** der Applikator Hohlfaserborsten aufweist.

5. Vorrichtung nach einem der vorhergehenden Ansprüche, ***dadurch gekennzeichnet, dass*** sie eine Einrichtung zum Befeuchten des Applikators aufweist.

6. Vorrichtung nach einem der vorhergehenden Ansprüche, ***dadurch gekennzeichnet, dass*** sie mindestens eine Wasserdüse aufweist.

7. Vorrichtung nach einem der vorhergehenden Ansprüche, ***dadurch gekennzeichnet, dass*** der Applikator Bürsten- oder Bandsegmente (141, 142, 143) aufweist, die relativ zueinander beweglich angeordnet sind.

8. Vorrichtung nach Anspruch 7, ***dadurch gekennzeichnet, dass*** Applikatorsegmente getrennt voneinander mit der Hochspannungsquelle verbunden sind.

9. Vorrichtung nach Anspruch 7 oder 8, ***dadurch gekennzeichnet, dass*** die Applikatorsegmente nebeneinander oder hintereinander angeordnet sind.

10. Vorrichtung nach einem der vorhergehenden Ansprüche, ***dadurch gekennzeichnet, dass*** der Applikator eine profilierte Oberfläche aufweist.

11. Vorrichtung nach einem der vorhergehenden Ansprüche, ***dadurch gekennzeichnet, dass*** die Fördereinrichtung ein Schienenfahrzeug ist.

12. Vorrichtung nach einem der vorhergehenden Ansprüche, ***dadurch gekennzeichnet, dass*** die Fördereinrichtung ein Drehgestell aufweist und der Applikator am Drehgestell befestigt ist.

13. Vorrichtung nach einem der vorhergehenden Ansprüche, ***dadurch gekennzeichnet, dass*** die Fördereinrichtung einen Roboter aufweist, der das Bewegen der Vorrichtung steuert.

14. Vorrichtung nach einem der vorhergehenden Ansprüche, ***dadurch gekennzeichnet, dass*** sie eine mechanische Einrichtung zum Abtöten oder Schwächen von Pflanzen und anderen Organismen über chemische oder physikalische Verfahren aufweist.

15. Vorrichtung nach einem der vorhergehenden Ansprüche, ***dadurch gekennzeichnet, dass*** sie einen Datenspeicher aufweist, der mit einer Steuereinrichtung in Verbindung steht, die mit der Höhenverstelleinrichtung in Verbindung steht.

16. Vorrichtung nach einem der vorhergehenden Ansprüche, ***dadurch gekennzeichnet, dass*** die Höhenverstelleinrichtung pneumatisch einstellbar ist.

17. Verfahren zur Verwendung einer Vorrichtung (140) nach einem der vorhergehenden Ansprüche, ***dadurch gekennzeichnet, dass*** der Applikator mittels der Fördereinrichtung über eine Bodenfläche bewegt wird und relativ zur Fördereinrichtung bewegt wird, wobei die Geschwindigkeit des Applikators relativ zur Bodenfläche abhängig von der Lateralgeschwindigkeit der Fördereinrichtung relativ zur Bodenfläche verändert wird.

18. Verfahren nach Anspruch 17, ***dadurch gekennzeichnet, dass*** zu der zu behandelnden Fläche Daten gesammelt werden und die Hochspannungsquelle und/oder die Höhenverstelleinrichtung auf der Grundlage der ermittelten Daten gesteuert werden.

19. Verfahren nach Anspruch 17 oder 18, ***dadurch gekennzeichnet, dass*** während der Verwendung der Vorrichtung (140) Daten zum Einsatz der Vorrichtung (140) und/oder zu den zu behandelnden und/oder den behandelten Flächen gesammelt werden.

## Claims

1. Equipment (140) for killing or weakening plants and other organisms, which comprises a conveying device for moving the equipment, a high voltage source and an applicator which is electrically connected to the high voltage source, wherein the applicator is provided with a sensor-guided height adjusting device, ***characterized in that*** the applicator comprises at least one belt (144) which is guided over spaced rollers (145, 146, 149, 150) as a continuous belt.

2. The equipment as claimed in claim 1, ***characterized in that*** the applicator comprises at least one brush.

3. The equipment as claimed in one of the preceding claims, ***characterized in that*** the applicator comprises a roller within which the high voltage source is disposed.

4. The equipment as claimed in one of the preceding claims, ***characterized in that*** the applicator has hollow fibre bristles.

5. The equipment as claimed in one of the preceding claims, ***characterized in that*** it has a device for moistening the applicator.

6. The equipment as claimed in one of the preceding claims, ***characterized in that*** it has at least one water jet.

7. The equipment as claimed in one of the preceding claims, ***characterized in that*** the applicator comprises brush or belt segments (141, 142, 143) which are disposed in a movable manner relative to each other.

8. The equipment as claimed in claim 7, ***characterized in that*** applicator segments are connected to the high voltage source separately from one another.

9. The equipment as claimed in claim 7 or claim 8, ***characterized in that*** the applicator segments are disposed next to each other or one behind the other.

10. The equipment as claimed in one of the preceding claims, ***characterized in that*** the applicator has a profiled surface.

11. The equipment as claimed in one of the preceding claims, ***characterized in that*** the conveying device is a track vehicle.

12. The equipment as claimed in one of the preceding claims, ***characterized in that*** the conveying device comprises a bogie and the applicator is fastened to the bogie.

13. The equipment as claimed in one of the preceding claims, ***characterized in that*** the conveying device comprises a robot which controls the movement of the equipment.

14. The equipment as claimed in one of the preceding claims, ***characterized in that*** it comprises a mechanical device for killing or weakening plants and other organisms by means of a chemical or physical method.

15. The equipment as claimed in one of the preceding claims, ***characterized in that*** it has a memory which is connected to a control device which is connected to the height adjusting device.

16. The equipment as claimed in one of the preceding claims, ***characterized in that*** the height adjusting device is pneumatically adjustable.

17. A method for using a device (140) as claimed in one of the preceding claims, ***characterized in that*** the applicator is moved by means of the conveying device over a ground surface and is moved relative to the conveying device, wherein the speed of the applicator relative to the ground surface is varied as a function of the lateral speed of the conveying device relative to the ground surface.

18. The method as claimed in claim 17, ***characterized in that*** the data is collected in respect of the area to be treated and the high voltage source and/or the height adjusting device are controlled on the basis of the determined data.

19. The method as claimed in claim 17 or claim 18, ***characterized in that*** during use of the equipment (140), data is collected regarding the operation of the equipment (140) and/or regarding the area to be treated and/or regarding the treated area.

## Revendications

1. Dispositif (140), destiné à détruire ou à affaiblir des végétaux et autres organismes, qui comporte un système de convoyage pour le déplacement du dispositif, une source de haute tension et un applicateur électriquement connecté sur la source de haute tension, l'applicateur comportant un système d'ajustage en hauteur guidé par capteur, ***caractérisé en ce que*** l'applicateur comporte au moins une bande (144) qui est guidée sous la forme d'une bande continue par l'intermédiaire de rouleaux (145, 146, 149, 150) écartés.

2. Dispositif selon la revendication 1, ***caractérisé en ce que*** l'applicateur comporte au moins une brosse.

3. Dispositif selon l'une quelconque des revendications précédentes, ***caractérisé en ce que*** l'applicateur comporte un rouleau à l'intérieur duquel est placée une source de haute tension.

4. Dispositif selon l'une quelconque des revendications précédentes, ***caractérisé en ce que*** l'applicateur comporte des poils en fibres creuses.

5. Dispositif selon l'une quelconque des revendications précédentes, ***caractérisé en ce qu'**il* comporte un système destiné à humidifier l'applicateur.

6. Dispositif selon l'une quelconque des revendications précédentes, ***caractérisé en ce qu**'il* comporte au moins un gicleur d'eau.

7. Dispositif selon l'une quelconque des revendications précédentes, ***caractérisé en ce que*** l'applicateur comporte des segments de brosse ou de bande (141, 142, 143) qui sont placés en étant mobiles les uns par rapport aux autres.

8. Dispositif selon la revendication 7, ***caractérisé en ce que*** des segments d'applicateur sont connectés séparément les uns des autres sur la source de haute tension.

9. Dispositif selon la revendication 7 ou 8, ***caractérisé en ce que*** les segments d'applicateur sont placés côte à côte ou les uns derrière les autres.

10. Dispositif selon l'une quelconque des revendications précédentes, ***caractérisé en ce que*** l'applicateur comporte une surface profilée.

11. Dispositif selon l'une quelconque des revendications précédentes, ***caractérisé en ce que*** le système de convoyage est un véhicule sur rails.

12. Dispositif selon l'une quelconque des revendications précédentes, ***caractérisé en ce que*** le système de convoyage comporte un bogie et **en ce que** l'applicateur est fixé sur le bogie.

13. Dispositif selon l'une quelconque des revendications précédentes, ***caractérisé en ce que*** le système de convoyage comporte un robot, qui commande de déplacement du dispositif.

14. Dispositif selon l'une quelconque des revendications précédentes, ***caractérisé en ce qu***'il comporte un système mécanique, destiné à détruire ou à affaiblir des végétaux et autres organismes via des procédés chimiques ou physiques.

15. Dispositif selon l'une quelconque des revendications précédentes, ***caractérisé en ce qu***'il comporte une mémoire de données, qui est connectée sur un système de commande qui est connecté sur le système d'ajustage en hauteur.

16. Dispositif selon l'une quelconque des revendications précédentes, ***caractérisé en ce que*** le système d'ajustage en hauteur est réglable par voie pneumatique.

17. Procédé, destiné à utiliser un dispositif (140) selon l'une quelconque des revendications précédentes, ***caractérisé en ce que*** l'on déplace l'applicateur au moyen du système de convoyage sur une surface de sol et par rapport au système de convoyage, la vitesse de l'applicateur par rapport à la surface de sol étant modifiée en fonction de la vitesse latérale du système de convoyage par rapport à la surface de sol.

18. Procédé selon la revendication 17, ***caractérisé en ce que*** l'on collecte des données concernant la surface qu'il convient de traiter et l'on commande la source de haute tension et/ou le système d'ajustage en hauteur sur la base des données déterminées.

19. Procédé selon la revendication 17 ou 18, ***caractérisé en ce que*** pendant l'utilisation du dispositif (140), on collecte des données pour l'utilisation du dispositif (140) et/ou concernant les surfaces qu'il convient de traiter et/ou traitées.
